(19) Europäisches Patentamt
European Patent Office
Office européen des brevets

(11) **EP 2 616 224 B1**

(12) **EUROPÄISCHE PATENTSCHRIFT**

(45) Veröffentlichungstag und Bekanntmachung des Hinweises auf die Patenterteilung:
**16.08.2017 Patentblatt 2017/33**

(21) Anmeldenummer: **11757305.5**

(22) Anmeldetag: **14.09.2011**

(51) Int Cl.:
**B29C 45/78** *(2006.01)*      **B29C 45/76** *(2006.01)*

(86) Internationale Anmeldenummer:
**PCT/EP2011/065917**

(87) Internationale Veröffentlichungsnummer:
**WO 2012/035052 (22.03.2012 Gazette 2012/12)**

(54) **VERFAHREN ZUR HERSTELLUNG EINES KUNSTSTOFF-FORMTEILS**

METHOD FOR PRODUCING A MOLDED PLASTICS PART

PROCÉDÉ DE FABRICATION D'UNE PIÈCE MOULÉE EN PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2010 DE 102010045900**

(43) Veröffentlichungstag der Anmeldung:
**24.07.2013 Patentblatt 2013/30**

(73) Patentinhaber: **KraussMaffei Technologies GmbH 80997 München (DE)**

(72) Erfinder: **GRIMM, Günther 86567 Hilgertshausen (DE)**

(74) Vertreter: **Wilhelm, Ludwig KraussMaffei Group GmbH Krauss-Maffei-Strasse 2 80997 München (DE)**

(56) Entgegenhaltungen:
**JP-B- 7 025 114    US-A- 5 720 912**

**Beschreibung**

Die Erfindung betrifft ein Verfahren zur Herstellung eines Kunststoff-Formteils gemäß dem Oberbegriff von Anspruch 1.

Üblicherweise wird bei der Herstellung eines Kunststoff-Formteils die für dieses Kunststoff-Formteil erforderliche Kühlzeit empirisch ermittelt. Für die Dauer der Kühlzeit wird ein Temperiermedium mit einer bestimmten Vorlauftemperatur und unter einem bestimmten Druck sowie bei einer bestimmten Durchflussmenge durch die Form geleitet. Sobald die vorgegebene Kühlzeit abgelaufen ist, wird davon ausgegangen, dass das Kunststoff-Material ausreichend abgekühlt ist und das Formteil entformt werden kann. Dabei wird die Kühlzeit in der Regel so bemessen, dass auch geringe Schwankungen in der Vorlauftemperatur und/oder bei der Durchflussmenge sich nicht nachteilig auf die Qualität des Formteils auswirken. Schwankungen in der Vorlauftemperatur können beispielsweise daher kommen, dass die Form mit Wasser gekühlt wird, das direkt von einer zentralen Wasserversorgung stammt und dessen Temperatur grundsätzlich selten konstant über einen längeren Zeitraum ist. Aber auch bei der Verwendung von Temperiergeräten, mit denen das Temperiermedium wie zum Beispiel Wasser mit einer konstanten Temperatur bereitgestellt werden kann, kann es zu Schwankungen in der Vorlauftemperatur kommen. Dies kann beispielsweise dadurch kommen, dass das Temperiermedium aus dem Rücklauf, d.h. also mit der höheren Temperatur, von dem Temperiergerät nicht vollständig oder nicht innerhalb einer kurzen Zeit auf die Solltemperatur des Vorlaufs abgekühlt werden kann. Daher wird man die Kühlzeit immer ein wenig größer vorgeben, als es unter optimalen Bedingungen eigentlich erforderlich wäre. Im Ergebnis führt dies zu einer insgesamt längeren Zykluszeit und damit zu einer Verschlechterung der Produktivität. Die Verwendung von Temperiergeräten bei der Herstellung von Kunststoff-Formteilen ist beispielsweise aus der DE102005019890B3 bekannt. Das Dokument US-A-5720912 offenbart ein Verfahren gemäß dem Oberbegriff des Anspruchs 1 . Ausgehend von diesem Stand der Technik liegt der Erfindung die Aufgabe zugrunde, ein Verfahren zur Herstellung eines Kunststoff-Formteils anzugeben, das sich durch eine verbesserte Produktivität bei gleichbleibender Formteil-Qualität auszeichnet.

Die Lösung dieser Aufgabe erfolgt bei einem gattungsgemäßen Verfahren durch die kennzeichnenden Merkmale von Anspruch 1. Vorteilhafte Weiterentwicklungen und Ausgestaltungen finden sich in den abhängigen Ansprüchen.

Dadurch, dass diejenige Wärmemenge $Q_i$ ermittelt wird, die innerhalb eines vorgebbaren Zeitintervalls $t_i$ von dem in der Kavität befindlichen Kunststoff-Material an das Temperiermedium abgegeben worden ist, dass dieser Vorgang über mehrere aufeinanderfolgende Zeitintervalle während des Abkühlens des KunststoffMaterials wiederholt wird, dass die so ermittelten Wärmemengen $Q_i$ aufsummiert werden und dass der auf diese Weise erhaltene Summenwert $Q_{ges}$ einer weiteren Verwendung zugeführt wird, kann die Produktivität bzw. die Formteilqualität auf verschiedene Art und Weise verbessert werden. Gemäß der Erfindung wird vorgesehen, dass bei Erreichen eines vorgebbaren Wertes der aufsummierten von dem Kunststoff-Formteil an das Temperiermedium abgegebenen Gesamtwärmemenge $Q_{ges}$ der Entformungsvorgang gestartet wird, so dass Schwankungen in der Vorlauftemperatur und/oder der Durchflussmenge unberücksichtigt bleiben können. Es wird einfach solange gekühlt, bis die für dieses Kunststoff-Formteil typische Gesamtwärmemenge $Q_{ges}$ abgeführt worden ist. Dieser Wert wird zuvor ermittelt und als Sollwert vorgegeben. Dies kann zu unterschiedlich langen tatsächlichen Kühlzeiten führen. Diese Kühlzeiten liegen aber in der Regel unterhalb der nach dem eingangs genannten Stand der Technik empirisch ermittelten Kühlzeit. Über einen längeren Zeitraum gesehen werden somit mehr Formteile pro Zeiteinheit hergestellt als beim Stand der Technik und das bei gleicher Formteil- bzw. Produktqualität.

Die Zeitintervalle $t_i$ werden möglichst kurz gewählt, so dass quasi fortlaufend eine Wärmemenge $Q_i$ ermittelt wird. Vorzugsweise liegen die Zeitintervalle unterhalb 1 Sekunde und besonders vorteilhaft unterhalb von 100 Millisekunden. Die unterste Grenze hängt letztlich davon ab, wie schnell die Werte für die Vorlauftemperatur und die Rücklauftemperatur sowie den Durchfluss gemessen und ausgewertet werden können. Im Idealfall wird die Wärmemenge $Q_{ges}$ wie unten angegeben berechnet:

$$\text{Gleichung (Gl.1)} \qquad Q_{ges.} = \int Wt \cdot dt$$

wobei

$Q_{ges.}$ [kWh] = Wärmemenge, die in der Zeit t von dem Kunststoff-Formteil an das Temperiermedium abgegeben worden ist;
W = Wärmeleistung [kW] des Temperiermediums;
V = Volumenstrom [l/s] des Temperiermediums;
$\rho$ = Dichte [kg/l] des Temperiermediums;
$C_w$ = spezifische Wärmekapazität des Temperiermediums [Wh/kgK];
$\Delta T = T_v - T_r$ = Temperatur im Vorlauf - Temperatur im Rücklauf [K];

und

$$\text{Gleichung (Gl.2)} \quad W = V \times \rho \times cw \times \Delta T$$

ist.

In der Praxis möglich sind beispielsweise Zeitintervalle von 10 Millisekunden. Je kürzer die Zeitintervalle dt gewählt sind, um so genauer kann man an einen vorgegebenen Sollwert an Gesamtwärmemenge $Q_{ges}$ herankommen, d.h. um so geringer ist der Unterschied zwischen dem tatsächlichen Summenwert $Q_{ges}$ und dem vorgegebenen Sollwert bei der Beendigung des Kühlvorgangs bzw. beim Starten des Entformungsvorgangs.

Gegebenenfalls können für die Kühlung des Formteils mehrere Temperierkanäle oder Temperierbereiche $K_n$ (n = 1, 2, ...) in der Form oder in einer Formhälfte vorgesehen sein. In diesem Fall kann vorgesehen werden, dass für jeden Temperierkanal bzw. jeden Temperierbereich eine Gesamtwärmemenge $Q_{ges(n)}$ ermittelt wird, und dass der Entformungsvorgang gestartet wird, wenn die Summe aus den Gesamtwärmemengen $Q_{ges(n)}$ der einzelnen Temperierkanäle bzw. Temperierbereiche einen vorgebbaren Wert erreicht hat. Die Summe entspricht somit derjenigen Wärmemenge, die dem Formteil insgesamt zu entziehen ist, bis es entformt werden kann.

Gemäß einem weiteren Aspekt der Erfindung können mehrere Kavitäten in der Form vorgesehen sein, denen jeweils wenigstens ein Temperierkanal zugeordnet ist. Für jede dieser Kavitäten kann eine Gesamtwärmemenge $Q_{ges}$(Kavität n) ermittelt werden, die von dieser Kavität an den dieser Kavität zugeordneten Temperierkanal bzw. den dieser Kavität zugeordneten Temperierkanälen übertragen wird. Man kann auch von einer kavitätsbezogenen oder kavitätspezifischen Gesamtwärmemenge $Q_{ges}$(Kavität n) sprechen, d.h. einer Gesamtwärmemenge $Q_{ges}$(Kavität n), die man genau dieser Kavität zuordnen und auswerten kann. Beispielsweise kann vorgesehen werden, dass ein Alarm erzeugt wird und/oder der Spritzgießvorgang abgebrochen wird, wenn in einer der Kavitäten eine vorgebbare Gesamtwärmemenge $Q_{ges}$(Kavität n) nicht innerhalb einer vorgebbaren Zeit erreicht worden ist. Dies kann vorkommen, wenn beispielsweise der Angusskanal verstopft ist und kein oder nur wenig Kunststoff-Material in eine Kavität gelangt. In diesem Fall muss nämlich keine oder nur eine geringe Wärmemenge von dem dieser Kavität zugeordneten Temperierkanal bzw. Temperierkanälen übernommen und abgeführt werden. In gleicher Weise kann ein aus einer Kavität nicht entformtes Kunststoff-Formteil im nachfolgenden Zyklus dazu führen, dass in diese Kavität kein neues Kunststoff-Material eingespritzt wird. In diesem Fall kommt es dazu, dass keine Wärmemenge anfällt, die abgeführt werden muss.

Des Weiteren können Schalt- und/oder Regelventile vorgesehen werden, mit denen der Durchfluss und/oder die Temperatur in den Temperierkanälen bzw. Temperierbereichen eingestellt oder geregelt werden können. Die Schalt- und/oder Regelventile können dabei in der Weise betätigt werden, dass eine vorgebbare Gesamtwärmemenge $Q_{ges(n)}$ für jeden der Temperierkanäle bzw. der Temperierbereiche nach Ablauf der gleichen Zeit erreicht worden ist. Damit kann der Kühlvorgang zeitlich optimiert werden. Wenn beispielsweise festgestellt wird, dass in bestimmten Temperierbereichen die dortige Gesamtwärmemenge $Q_{ges(n1)}$ relativ früh und in anderen Temperierbereichen die dortige Gesamtwärmemenge $Q_{ges(n2)}$ relativ spät erreicht wird, kann in dem zuerst genannten Temperierbereich die Durchflussmenge reduziert und in dem zuletzt genannten Temperierbereich die Durchflussmenge erhöht werden. Insgesamt wird somit erreicht, dass die von dem Formteil zu entziehende Gesamtwärmemenge zu einem frühestmöglichen Zeitpunkt erreicht wird. Dies führt dazu, dass die tatsächliche Kühlzeit auf ein optimales Minimum reduziert werden kann.

Gemäß einem weiteren Aspekt der vorliegenden Erfindung kann man auch die Gesamtwärmemenge $Q_{ges(Z)}$ in einem Zyklus aufzeichnen bzw. abspeichern und von Zyklus zu Zyklus dokumentieren. Damit kann später eine eindeutige Zuordnung eines Formteils zu einer bestimmten abgeführten Wärmemenge erfolgen bzw. - wenn man diesen Wert durch die Zykluszeit dividiert - zu einer bestimmten Kühlleistung.

Wenn im Laufe der Produktion festgestellt wird, dass die Zeit bis zu Erreichung der Gesamtwärmemenge $Q_{ges(Z)}$ zunimmt oder die innerhalb einer vorgegebenen Zykluszeit abgeführte Wärmemenge abnimmt, kann auf das Vorliegen von Fehlern im Kühlsystem geschlossen werden. Beispielsweise kann es dazu kommen, dass im Laufe der Zeit Kühlkanäle verkalken oder verstopfen. Daher kann es vorteilhaft sein, wenn für ein bestimmtes Kunststoff-Formteil ein Maximum und/oder ein Minimum eines Sollwertes an $Q_{ges}$ vorgegeben wird und dass bei Überschreiten des Maximums und/oder Unterschreiten des Minimums ein Alarm ausgelöst wird. Der Alarm kann zyklusbezogen abgespeichert und dokumentiert werden, um so eine eindeutige Zuordnung eines Spritzgießzyklus mit Alarm zu einem bestimmten Formteil vorliegen zu haben.

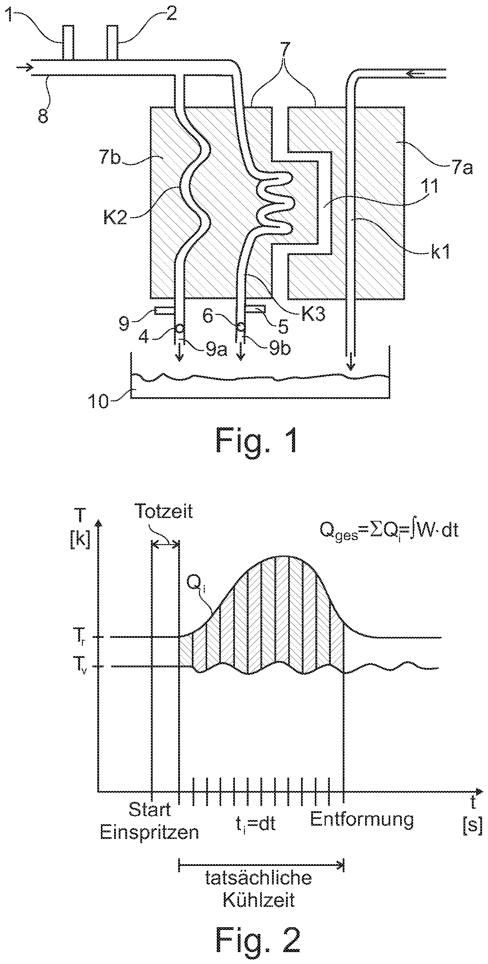

Nachfolgend soll die Erfindung anhand von Ausführungsbeispielen und unter Bezugnahme auf die Figuren 1 bis 3 näher beschrieben werden.

Die Figur 1 zeigt schematisch eine Form 7 bzw. eine Spritzgießwerkzeug 7 mit zwei Formhälften 7a und 7b, zwischen denen eine Kavität 11 zur Herstellung eines Kunststoff-Formteils gebildet werden kann. In der rechten Formhälfte 7a ist ein Kühlkanal K1 vorgesehen, während in der linken Formhälfte 7b zwei Kühlkanäle K2 und K3 vorgesehen sind. Die Kühlkanäle K2 und K3 in der linken Formhälfte werden von einem gemeinsamen Vorlauf 8 gespeist und die beiden Rückläufe 9a und 9b gelangen in ein gemeinsames Reservoir 10 eines an sich bekannten Temperiergeräts. Der Vorlauf 8 weist einen Temperatursensor 1 sowie einen Drucksensor 2 auf. In den beiden Rückläufen 9a und 9b sind Temperatursensoren 3 und 5 sowie Durchflusssensoren 4 und 6 vorgesehen.

Die Figur 2 zeigt beispielhaft einen möglichen Verlauf der Temperatur im Vorlauf ($T_v$) und im Rücklauf ($T_r$) für einen Kühlkanal $K_n$. Mit dem Beginn des Einspritzens heißer Kunststoff-Schmelze vergeht zunächst eine kurze Zeit, auch Totzeit genannt, bis Wärme von dem Kunststoff-Formteil über das Material der Form 7 an das Temperiermedium in dem Kühlkanal $K_n$ übergeht. Nach Ablauf der Totzeit steigt die Temperatur $T_r$ im Rücklauf (z.B. 9a oder 9b) zunächst an, erreicht ein Maximum und fällt dann wieder ab. Die Vorlauftemperatur $T_v$ unterliegt gegebenenfalls geringen Schwankungen, wie dies in der Figur 2 durch den wellenförmigen Verlauf der Temperatur $T_v$ dargestellt ist. Auf der Zeitachse t wird der Spritzgießzyklus, insbesondere die Kühlzeit, in Zeitintervalle $t_i$ unterteilt und die in jedem Zeitintervall $t_i$ von dem Kunststoff-Formteil an das Temperiermedium abgegebene Wärmemenge (d.h. die Wärme- bzw. Kühlleistung W) gemäß der obigen Gleichung (Gl.2) berechnet. Dieser Vorgang wird über mehrere aufeinanderfolgende Zeitintervalle $t_i$ während des Abkühlen des Formteils wiederholt und die so ermittelten Wärmemengen $Q_i$ werden gemäß obiger Gleichung (Gl.1) aufsummiert, wobei die Zeitintervalle $t_i$ dem dt in der Gleichung (Gl.1) entsprechen. Die Summe $Q_{ges}$ entspricht den zusammengerechneten schraffierten Flächen in der Figur 2. Bei Erreichen eines vorgebbaren Wertes der aufsummierten von dem Kunststoff-Formteil an das Temperiermedium abgegebenen Gesamtwärmemenge $Q_{ges}$ kann der Entformungsvorgang gestartet werden. Der Kühlvorgang kann abgebrochen werden. Je nach Verlauf der Temperaturen $T_r$ und $T_v$ kann der vorgegebene Wert der aufsummierten Gesamtwärmemenge $Q_{ges}$ früher oder später erreicht sein. Der Zeitpunkt der Entformung kann sich also von Zyklus zu Zyklus ändern.

Falls mehrere Kühlkanäle $K_n$ vorhanden sind, kann für jeden Kühlkanal $K_n$ (n = 1, 2, ...) gemäß dem oben geschilderten Verfahren ein Teilmenge an $Q_{ges}$ ermittelt werden, d.h. eine Gesamtwärmemenge $Q_{ges(n)}$ pro Kühlkanal n bzw. pro Temperierbereich. Der Entformungsvorgang wird gestartet, wenn die Summe aus den Gesamtwärmemengen $Q_{ges(n)}$ der einzelnen Temperierkanäle bzw. Temperierbereiche einen vorgebbaren Wert an der insgesamt von dem gekühlten Formteil zu übertragenen Wärmemenge $Q_{ges}$ erreicht hat. Nicht dargestellt sind an sich bekannte Schalt- und/oder Regelventile, mit denen der Durchfluss und/oder die Temperatur in den Temperierkanälen $K_n$ bzw. Temperierbereichen eingestellt oder geregelt werden können. Die Schalt- und/oder Regelventile können dabei in der Weise betätigt werden, dass eine vorgebbare Gesamtwärmemenge $Q_{ges(n)}$ für jeden der Temperierkanäle n bzw. der Temperierbereiche nach Ablauf der gleichen Zeit erreicht worden ist. Damit kann der Kühlvorgang zeitlich optimiert werden.

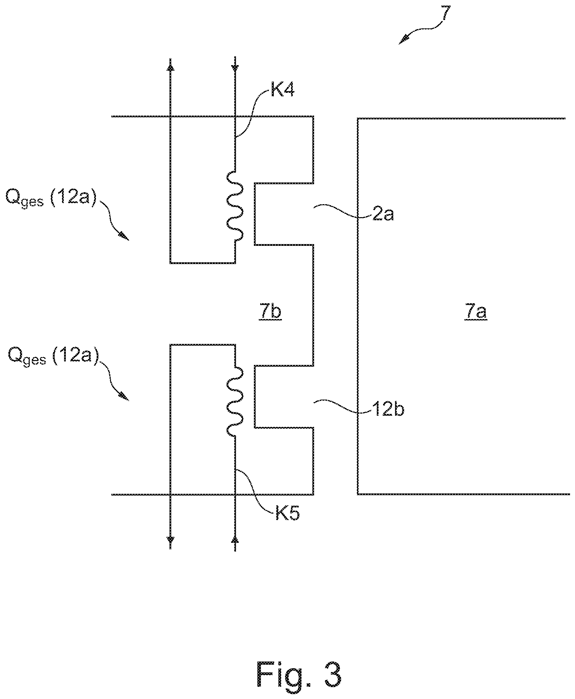

Anhand der Figur 3 soll ein weiterer Aspekt der vorliegenden Erfindung erläutert werden. Die Figur 3 zeigt schematisch eine Form 7 bzw. eine Spritzgießwerkzeug 7 mit zwei Formhälften 7a und 7b, zwischen denen zwei Kavitäten 12a und 12b zur Herstellung von zwei Kunststoff-Formteilen gebildet werden können. In der linken Formhälfte 7b sind zwei Kühlkanäle K4 und K5 vorgesehen, während in der rechten Formhälfte 7a der Einfachheit halber kein Kühlkanal vorgesehen sind. Selbstverständlich können auch in der rechten Formhälfte 7a ein oder mehrere Kühlkanäle vorgesehen sein. Ebenso können in der linken Formhälfte 7b jeder der Kavitäten mehrere Kühlkanäle oder Temperierbereiche zugeordnet werden, wie dies oben im Zusammenhang mit der Figur 1 beschrieben worden ist. Vorliegend ist jeder der Kavitäten 12a und 12b ein eigener bzw. separater Kühlkanal K4 und K5 zugeordnet. Daher kann jeder der Kavitäten 12a, 12b eine bestimmte Gesamtwärmemenge $Q_{ges}$(Kavität n) zugeordnet werden, die an das Temperiermedium in dem der Kavität zugeordneten Kühlkanal abgegeben wird, vorliegend also eine Gesamtwärmemenge $Q_{ges}$(12a) sowie eine Gesamtwärmemenge $Q_{ges}$(12b). Die Messung der Parameter und die Berechnung von $Q_{ges}$(Kavität n) erfolgt analog wie bei dem zuvor beschriebenen Beispiel mit Hilfe der oben genannten Gleichungen Gl.1 und Gl.2. Für jedes in einer Kavität 12a, 12b herzustellende Kunststoff-Formteil kann eine Gesamtwärmemenge Qges(Kavität 12a) und Qges(Kavität 12b) als Sollwert vorgegeben werden. Wenn alle vorgegebenen Gesamtwärmemengen erreicht worden sind, kann die Entformung der fertigen Kunststoff-Formteile erfolgen. Es kann auch ein Zeitfenster vorgegeben werden, bei dem auf jeden Fall die Form geöffnet wird, auch wenn bei einer oder mehreren Kavitäten der Sollwert bzw. die vorgegebene Gesamtwärmemenge $Q_{ges}$(Kavität n) noch nicht erreicht worden ist. In diesem Fall kann ein Fehler vorliegen, weil beispielsweise der Angusskanal zu den betroffenen Kavitäten verstopft ist. Man kann auch einen Alarm auslösen und/oder den Spritzgießvorgang abbrechen, wenn in einer oder mehreren der Kavitäten (12a, 12b) eine vorgebbare Gesamtwärmemenge $Q_{ges}$(Kavität n) nicht innerhalb einer vorgebbaren Zeit erreicht worden ist.

## Bezugszeichenliste

| 1 | Temperatursensor im Vorlauf |
|---|---|
| 2 | Drucksensor im Vorlauf |
| 3 | Temperatursensor im Rücklauf |
| 4 | Durchflusssensor im Rücklauf |
| 5 | Temperatursensor im Rücklauf |

| 6 | Durchflusssensor im Rücklauf |
| 7 | Form |
| 7a | Rechte Formhälfte |
| 7b | Linke Formhälfte |
| 8 | Vorlauf |
| 9a | Erster Rücklauf |
| 9b | Zweiter Rücklauf |
| 10 | Reservoir |
| 11 | Kavität |
| 12a | Kavität |
| 12b | Kavität |
| K1 | Erster Kühlkanal |
| K2 | Zweiter Kühlkanal |
| K3 | Dritter Kühlkanal |
| K4 | Kühlkanal für Kavität 12a |
| K5 | Kühlkanal für Kavität 12b |

**Patentansprüche**

1. Verfahren zur Herstellung eines Kunststoff-Formteils, wobei ein Kunststoff-Material aufgeschmolzen und in eine Kavität (11) einer Form (7) eingespritzt wird, wobei mittels eines Temperiermediums das Kunststoff-Material in der Kavität (11) der Form (7) abgekühlt wird, und wobei nachfolgend das fertige Kunststoff-Formteil entnommen wird, wobei diejenige Wärmemenge $Q_i$ ermittelt wird, die innerhalb eines vorgebbaren Zeitintervalls $t_i$ von dem in der Kavität befindlichen Kunststoff-Material an das Temperiermedium abgegeben worden ist, dass dieser Vorgang über mehrere aufeinanderfolgende Zeitintervalle während des Abkühlens des KunststoffMaterials wiederholt wird, dass die so ermittelten Wärmemengen $Q_i$ aufsummiert werden und dass der auf diese Weise erhaltene Summenwert $Q_{ges}$ einer weiteren Verwendung zugeführt wird, **dadurch gekennzeichnet, dass** bei Erreichen eines vorgebbaren Wertes der aufsummierten von dem Kunststoff-Material in der Kavität (11) bzw. von dem Formteil an das Temperiermedium abgegebenen Gesamtwärmemenge $Q_{ges}$ der Entformungsvorgang gestartet wird.

2. Verfahren nach Anspruch 1,
   **dadurch gekennzeichnet, dass**
   ein Zeitintervall $t_i$ kleiner ist als 1 Sekunde, vorzugsweise kleiner als 100ms.

3. Verfahren nach einem der Ansprüche 1 bis 2 ,
   **dadurch gekennzeichnet, dass**
   mehrere Temperierkanäle oder Temperierbereiche $K_n$ (n = 1,2, ...) in der Form (7) oder einer Formhälfte (7a, 7b) vorgesehen sind und dass für jeden Temperierkanal $K_n$ bzw. jeden Temperierbereich eine Teil-Gesamtwärmemenge $Q_{ges(n)}$ ermittelt wird.

4. Verfahren nach Anspruch 3 ,
   **dadurch gekennzeichnet, dass**
   dass der Entformungsvorgang gestartet wird, wenn die Summe aus den Gesamtwärmemengen $Q_{ges(n)}$ der einzelnen Temperierkanäle bzw. Temperierbereiche einen vorgebbaren Wert erreicht hat.

5. Verfahren nach einem der vorstehenden Ansprüche,
   **dadurch gekennzeichnet, dass**
   in der Form (7) mehrere Kavitäten (12a, 12b,...) vorgesehen sind, denen jeweils wenigstens ein Temperierkanal (K) zugeordnet ist, und dass für jede dieser Kavitäten (12a, 12b,...) eine Gesamtwärmemenge $Q_{ges}$(Kavität n) ermittelt wird, die von dieser Kavität an den dieser Kavität zugeordneten Temperierkanal (K) übertragen wird.

6. Verfahren nach Anspruch 5 ,
   **dadurch gekennzeichnet, dass**
   ein Alarm erzeugt wird und/oder der Spritzgießvorgang abgebrochen wird, wenn in einer der Kavitäten (12a, 12b) eine vorgebbare Gesamtwärmemenge $Q_{ges}$(Kavität n) nicht innerhalb einer vorgebbaren Zeit erreicht worden ist.

7. Verfahren nach einem der vorstehenden Ansprüche,

**dadurch gekennzeichnet, dass**
Schalt- und/oder Regelventile vorgesehen sind, mit denen der Durchfluss und/oder die Temperatur in den Temperierkanäle bzw. Temperierbereichen $K_n$ eingestellt oder geregelt werden können, und dass die Schalt- und/oder Regelventile in der Weise betätigt werden, dass eine vorgebbare Gesamtwärmemenge $Q_{ges(n)}$ für mehrere der Temperierkanäle bzw. der Temperierbereiche n nach Ablauf der gleichen Zeit erreicht worden ist, insbesondere für jeden der Temperierkanälen bzw. Temperierbereiche n.

**8.** Verfahren nach einem der vorstehenden Ansprüche,
**dadurch gekennzeichnet, dass**
die Gesamtwärmemenge $Q_{ges}$ für ein Kunststoff-Formteil zyklusbezogen abgespeichert und dokumentiert wird.

**9.** Verfahren nach Anspruch 8 ,
**dadurch gekennzeichnet, dass**
für ein bestimmtes Kunststoff-Formteil ein Maximum $Q_{ges(max)}$ und/oder ein Minimum $Q_{ges(min)}$ eines Sollwertes an $Q_{ges}$ vorgegeben wird und dass bei Überschreiten des Maximums $Q_{ges(max)}$ und/oder Unterschreiten des Minimums $Q_{ges(min)}$ ein Alarm ausgelöst wird, wobei der Alarm vorzugsweise zyklusbezogen abgespeichert und dokumentiert wird.

## Claims

**1.** A method for producing a molded plastics part, wherein a plastics material is melted and injected into a cavity (11) of a mold (7), wherein the plastics material in the cavity (11) of the mold (7) is cooled by means of a temperature control medium, and wherein the finished molded plastics part is subsequently removed, wherein that heat quantity $Q_i$, which the plastics material located in the cavity has dissipated to the temperature control medium within a predeterminable time interval $t_i$, is determined, that this process is repeated over a plurality of consecutive time intervals during the cooling of the plastics materials, that the heat quantities $Q_i$ determined in this manner are added up and that the cumulative value $Q_{ges}$ obtained in this way is supplied for a further use, **characterized in that** the demolding process is started, when reaching a predeterminable value of the total added up heat quantity $Q_{ges}$ dissipated by the plastics material in the cavity (11) or by the molded part, respectively, to the temperature control medium.

**2.** The method according to claim 1,
**characterized in that**
a time interval $t_i$ is less than 1 second, preferably less than 100 ms.

**3.** The method according to one of claims 1 to 2,
**characterized in that**
provision is made for a plurality of temperature control channels or temperature control areas $K_n$(n=1,2,...) in the mold (7) or in a mold half (7a, 7b) and that a partial total heat quantity $Q_{ges(n)}$ is determined for each temperature control channel $K_n$ or each temperature control area, respectively.

**4.** The method according to claim 3,
**characterized in that**
the demolding process is started when the sum of the total heat quantities $Q_{ges(n)}$ of the individual temperature control channels or temperature control areas, respectively, has reached a predeterminable value.

**5.** The method according to one of the preceding claims,
**characterized in that**
provision is made in the mold (7) for a plurality of cavities (12a, 12b, ...), to each of which at least one temperature control channel (K) is assigned and that for each of these cavities (12a, 12b, ...) a total heat quantity $Q_{ges}$(cavity n) is determined, which is transferred from this cavity to the temperature control channel (K) assigned to this cavity.

**6.** The method according to claim 5,
**characterized in that**
an alarm is generated and/or the injection molding process is terminated, when a predeterminable total heat quantity $Q_{ges}$ (cavity n) within one of the cavities (12a, 12b) has not been reached within a predeterminable time.

**7.** The method according to one of the preceding claims,
**characterized in that**
provision is made for switching and/or control valves, by means of which the flow and/or the temperature in the temperature control channels or temperature control areas $K_n$, respectively, can be adjusted or controlled, and that the switching and/or control valves are actuated in such a way that a predeterminable total heat quantity $Q_{ges(n)}$ has been reached for a plurality of the temperature control channels or of the temperature control areas n, respectively, after the same time has passed, in particular for each of the temperature control channels or temperature control areas n, respectively.

**8.** The method according to one of the preceding claims,
**characterized in that**
the total heat quantity $Q_{ges}$ for a molded plastics part is stored and documented in a cycle-related manner.

**9.** The method according to claim 8,
**characterized in that**
a maximum $Q_{ges(max)}$ and/or a minimum $Q_{ges(min)}$ of a target value of $Q_{ges}$ is predetermined for a certain molded plastics part and that an alarm is triggered in response to exceeding the maximum $Q_{ges(max)}$ and/or in response to falling below the minimum $Q_{ges(min)}$, wherein the alarm is preferably stored and documented in a cycle-related manner.

**Revendications**

**1.** Procédé de fabrication d'une pièce moulée en plastique, dans lequel un matériau plastique est fondu et injecté dans une cavité (11) d'un moule (7), dans lequel, au moyen d'un fluide de mise en température, le matériau plastique est refroidi dans la cavité (11) du moule (7), et dans lequel la pièce moulée en plastique terminée est ensuite prélevée, dans lequel la quantité de chaleur $Q_i$ qui est fournie du matériau plastique se trouvant dans la cavité au fluide de mise en température, dans un intervalle de temps $t_i$, est calculée, cette procédure est répétée sur plusieurs intervalles de temps successifs pendant le refroidissement du matériau plastique, les quantités de chaleur $Q_i$ ainsi calculées sont additionnées et la somme $Q_{ges}$ obtenue de cette façon est amenée vers une autre utilisation, **caractérisé en ce que** lorsqu'une valeur pré-définissable de la quantité de chaleur totale $G_{ges}$ additionnée, fournie du matériau plastique dans la cavité (11), respectivement de la pièce moulée au fluide de mise en température, est atteinte, la procédure de déformation est lancée.

**2.** Procédé selon la revendication 1, **caractérisé en ce qu'**un intervalle de temps $t_i$ est inférieur à 1 seconde, de préférence inférieur à 100ms.

**3.** Procédé selon l'une des revendications 1 à 2, **caractérisé en ce que** plusieurs canaux de mise en température ou zones de mise en température $K_n$ (n = 1, 2, ...) sont prévu(e)s dans le moule (7) ou une moitié de moule (7a, 7b) et que pour chaque canal de mise en température $K_n$, respectivement chaque zone de mise en température, une quantité de chaleur totale partielle $Q_{ges}$ (n) est calculée.

**4.** Procédé selon la revendication 3, **caractérisé en ce que** la procédure de déformation commence lorsque la somme des quantités de chaleur totale $Q_{ges(n)}$ des différents canaux de mise en température, respectivement zones de température, a atteint une valeur pré-définissable.

**5.** Procédé selon l'une des revendications précédentes, **caractérisé en ce que** plusieurs cavités (12a, 12b, ...) sont prévues dans le moule (7), auxquelles au moins un canal de mise en température (K) est respectivement attribué et que pour chacune de ces cavités (12a, 12b), une quantité de chaleur totale $Q_{ges}$ (cavité n) est calculée, qui est transmise de cette cavité au canal de mise en température (K) attribué à cette cavité.

**6.** Procédé selon la revendication 5, **caractérisé en ce qu'**une alarme est produite et/ou que la procédure d'injection est interrompue lorsque dans une des cavités (12a, 12b), une quantité de chaleur totale $Q_{ges}$ (cavité n) pré-définissable n'est pas atteinte dans un temps pré-définissable.

**7.** Procédé selon l'une des revendications précédentes, **caractérisé en ce que** des clapets de régulation et/ou de réglage sont prévus, avec lesquels le débit et/ou la température dans les canaux de mise en température, respectivement les zones de mise en température $K_n$, peuvent être réglés ou régulés, et que les clapets de régulation et/ou de réglage sont actionnés de manière à ce qu'une quantité de chaleur totale $Q_{ges}(n)$ pré-définissable soit atteinte pour plusieurs des canaux de mise en température, respectivement des zones de mise en température n après écoulement du même temps, en particulier pour chacun des canaux de mise en température, respectivement des zones de mise en température n.

8. Procédé selon l'une des revendications précédentes, **caractérisé en ce que** la quantité de chaleur totale $Q_{ges}$ est enregistrée et documentée pour une pièce moulée en plastique en fonction du cycle.

9. Procédé selon la revendication 8, **caractérisé en ce que** pour une pièce moulée en plastique définie, une $Q_{ges(max)}$ maximale et/ou une $Q_{ges(min)}$ minimale d'une valeur nominale de $Q_{ges}$ est pré-définie et qu'en cas de valeur au-delà de la $Q_{ges(max)}$ maximale et/ou en deçà de la $Q_{ges(min)}$ minimale, une alarme est déclenchée, de préférence enregistrée et documentée en fonction du cycle.

Fig. 1

$$Q_{ges}=\Sigma Q_i=\int W \cdot dt$$

Fig. 2

7

K4

$Q_{ges}$ (12a)

2a

7b

7a

$Q_{ges}$ (12a)

12b

K5

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005019890 B3
- US 5720912 A